(19) Europäisches Patentamt
European Patent Office
Office européen des brevets

(11) **EP 1 868 136 A2**

(12) **EUROPEAN PATENT APPLICATION**

(43) Date of publication:
**19.12.2007 Bulletin 2007/51**

(51) Int Cl.:
**G06K 7/00** (2006.01)

(21) Application number: **07109729.9**

(22) Date of filing: **06.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **15.06.2006 GB 0611860**
**01.09.2006 GB 0617164**

(71) Applicant: **Siemens Aktiengesellschaft**
**80333 Munich (DE)**

(72) Inventors:
• **Domokos, John**
**Romsey, SO51 7QT (GB)**
• **Horst, Dieter**
**90556 Cadolzburg (DE)**

(74) Representative: **Payne, Janice Julia**
**Siemens AG,**
**Postfach 22 16 34**
**80506 München (DE)**

(54) **Wireless RFID method**

(57) A method of listen before talk operation in a wireless system comprising at least one reader (R1, R2, R3, R4) comprises the or each reader listening for transmissions on a channel (CH4, CH10) for a period of time and comparing channel power with a threshold to determine whether a channel is available. If the channel is available, an identifier (SDI) is transmitted from a first reader to other members of a group of readers, indicating that the channel is available for re-use by the other members. The identifier is a predetermined system identifier allocated to all readers in the group of readers.

FIG 6

EP 1 868 136 A2

## Description

This invention relates to a method for listen before talk (LBT) operation and reader synchronisation in a wireless radio frequency identification (RFID) reader, and for reader synchronisation.

In RFID systems, there are a number of permitted channels for transmission. The LBT mode for RFID equipment is specified in the ETSI EN 302 208 specification. For short range devices the relevant specification is the EN 300 220 document. In summary, the existing requirements are that prior to transmission, the reader should listen to the channel for a fixed period of a minimum of 5 ms plus a random time of 0-5ms. If the channel power during this time is below a specified threshold, the reader may start to transmit. The maximum duration for transmission (talk window) is 4 s. After this time the reader must stop transmitting for at least a period of 100 ms, then listen again, before transmitting on the same channel. The specified threshold is -96 dBm for 2W readers. For short range devices the threshold is -90 dBm for the 101mW to 500mW category and -83 dBm in the up to 100mW category. The threshold is based on power measurement. The power is measured at the centre frequency and at +/- 75 KHz offset frequencies. The readers should also be able to coexist with uncoordinated short range devices. The minimum listening time of a short range device is 5 ms.

For dense interrogatory environment (DIE), additional steps are necessary. In Gen 2 RFID tags, a Miller sub-carrier is implemented to separate the uplink and downlink frequencies. Using the sub-carrier, it is possible to re-use the same frequency within a system of readers operating in the same mode. This mode of operation is called Dense Interrogatory Environment (DIE), or dense mode. In dense mode, the transmit (TX) and the receive (RX) frequencies are separated and therefore several readers can transmit simultaneously on the same channel. A group of readers sharing the same frequency should still behave like a single reader from the LBT point of view. Therefore, the existing requirements can be met just as if the whole system were a single reader with the following necessary additional steps.

The first reader in the system carries out a normal LBT and transmits an identifier to indicate that the frequency can be re-used by the members of the system. This becomes the master reader. Other members of the system need to be able to detect the identifier and preferably, use the same frequency. These readers become the slave readers. The system has to ensure that all readers stop transmitting when the overall transmission time reaches 4 s and after the 100ms gap the cycle can restart. If a gap of 5 ms or more occurs in the transmission in a given channel, the system then ensures that the channel has not been acquired during the gap by another system. The threshold for detecting the identifier is kept as low as possible, ideally near the same as the LBT threshold, to eliminate dead zones. In the case of wireless systems, identification is required to determine which readers belong to a given system. This is a requirement for system planning for co-existence with other systems.

Currently, there are two wireless proposals, both based on master and slave arrangement, in which the master reader broadcasts a unique signal that identifies the channel to be shared, and the slave readers detect this identifier and subsequently re-use the frequency. Both of these systems require synchronisation of the readers to "hear" the identifying signal(s). Neither of these methods provide adequate sensitivity for detecting the identifying signal reliably and both are therefore prone to dead zones. Another potential problem with LBT in dense mode is that the decision on which readers belong to a system (using the same frequency) is presently based on signal level measurement and defined thresholds. Such a method is highly unreliable as the propagation conditions vary significantly.

In one proposal, called listen window synchronization (LWS), the readers continuously monitor the traffic in parallel in all channels and the histories of the power levels are stored in the memory of each reader. For the LWS system every channel must have a separate receiver. The sequence starts with an LBT operation. At the end of the listen window, if the channel is free, a 5 ms mark, 5 ms space pulse is transmitted by the first (master) reader in the system. This pulse identifies that the channel can be shared. The pulse is detected by other (slave) readers which store the time of pulse arrivals and corresponding channel numbers. An algorithm acts on the stored information which determines which channel can be used for dense transmission and when.

The continuous monitoring of the traffic is necessary even after the detection of the identifying pulse to ensure that at no time was the channel dropped and then picked up subsequently by another device which operates independently from the system. The main weakness of this method is that it relies on detecting a single pulse; hence it is prone to impulsive interference. Receiver intermodulation is also a problem, because high signal to noise and interference ratio is required for the pulse detection and for reliable power monitoring.

In a second proposal, known as passive reader synchronization (PRS), a recognition pattern (a short Barker code), is transmitted repeatedly by the master reader. This is followed by the remaining talk time sequence (4 bits), and the whole information is transmitted at 200 ms intervals. The slave readers detect this pattern and when triggered, start transmitting using the same frequency. The carrier is AM modulated with a recognition pattern just like the data during the reader to tag communication. This leads to several significant implications.

The communication between the reader(s) and the tag(s) has to be interrupted at every 200ms interval. This may interfere with the reader to tag communication protocol. For timing constraints to comply with the protocol, the recognition pattern has to be kept very short, typically 16 bits long. Because of the timing limitations there is no scope for implementing a robust coding scheme on the recognition pattern, and therefore the detection threshold of the recognition pattern is interference limited. This leads to dead zones. All readers must be synchronised, that is, all readers must stop transmitting while the recognition pattern is being broadcast. This occurs every 200 ms and interrupts the transmissions. Furthermore, for synchronisation, high signal to noise and interference ratio required. These requirements are difficult to meet, especially in a noisy environment and where many readers operate together. The feasibility of this solution remains still unproven.

Both LWS and PRS, as described above, are based on a master and slave arrangement, in which the master reader broadcasts a signal that identifies the channel to be shared. The slave readers detect this identifier and subsequently re-use the same frequency. In the LWS system, the identifier is a pre-pulse, and in the PRS system it is a short Barker code. Neither of these solutions provide robust communications between the master and the slave readers in the presence of interference and intermodulation. Therefore vendors, who are developing the LWS and the PRS systems, are considering wired, or centralized LBT solutions for reliable DIE operation.

In current systems, a threshold is defined, above which the pre-pulse or the Barker code can be detected. This threshold determines the range at which the system can synchronise its readers. This threshold has to be significantly higher than the LBT threshold because of Signal to Noise+Interference limitations.

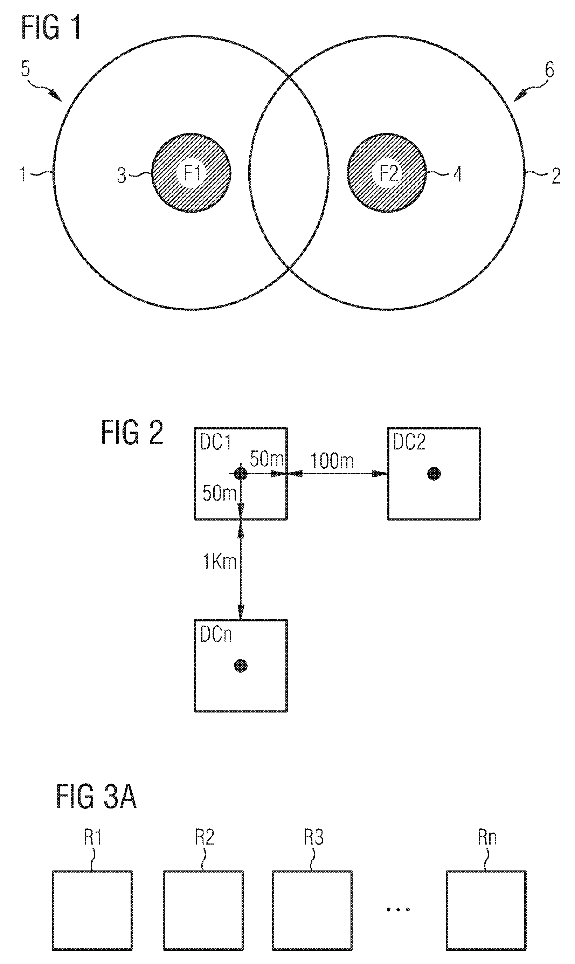

If the detection threshold of the recognition pattern is less than the LBT threshold, dead zones will occur, in which frequency re-use is not possible. In dead zones, the received level is less than the recognition pattern detection threshold, but higher than the LBT threshold. This means that the frequency cannot be re-used as illustrated in Fig.1. Fig.1 shows LBT -96dBm contours 1, 2 and dense identifier - 86dBm contours 3, 4 for F 1 and F2 systems in each case. In a first area 5, only F2 transmissions are permitted, in a second area 6, only F1 transmission are permitted and in a cross-over area 7, neither F1, nor F2 transmissions are allowed. In the example of Fig.1, the LBT threshold is -96 dBm and the threshold above which the receivers are able to detect the recognition pattern is -86 dBm. In the areas where the two LBT contours overlap, neither F 1 nor F2 can be used, even though in a dense system both frequencies would be re-useable.

Another illustration is given in Fig. 2. In the example of Fig. 2, the penetration loss is 11.2 dB, the transmit power is 33.0 dBm, the antenna gain is 0 dBi and the free space path loss is 31dB + 20logD. In DC2, the power is -65.9dBm. In DCn, the power is -81.3 dBm. In the dead zones, the received level is less than the pre-pulse (or Barker code) detection threshold, but higher than the LBT threshold. For example, in Fig. 2, the power level in all distribution centres (DC) exceeds the LBT threshold of -96dBm. This means that the readers cannot use the channels which are occupied by distribution centre DC1, unless they are able to decode the pre-pulse. If the readers in DCn are not able to decode the pre-pulse at -81.3dBm, they must find a new channel.

There is a proposal to reduce the level for the LBT detection threshold to -66dBm. Should this be adopted, even neighbouring distribution centres would have to find new channels. For example DC2 would not be able to share the spectrum with DC in this case.

Given that only 4 to 5 channels are available for RFID application, and that the LBT threshold of -96 dBm covers a huge area, it is important that the dead-zones are minimized. On the other hand, making the recognition pattern threshold -96 dBm would mean that systems several kilometres away from each other would attempt to synchronise to the same channel. In view of the fact that propagation conditions vary in time and from location to location such a situation would be clearly unworkable.

In accordance with the present invention, a method of listen before talk operation in a wireless radio frequency identification system comprising at least one reader comprises the or each reader listening for transmissions on a channel for a period of time; comparing channel power with a threshold to determine whether a channel is available; and if the channel is available, transmitting from a first reader an identifier to other members of a group of readers, indicating that the channel is available for re-use by the other members; wherein the identifier is a predetermined system identifier allocated to all readers in the group of readers.

Use of a system identifier allows optimum frequency reuse, so that members of the same system can be distinguished reliably, rather than relying on an analogue threshold to determine whether a reader is or is not a member of a group.

Preferably, each reader listens for transmissions on a series of channels sequentially to determine an available channel.

Preferably, the system identifier comprises a system identifier block, uniquely identifying a group to which the members belong.

Preferably, the system identifier is coded.

This gives substantial process gain, so that the system identifier can still be decoded, even with strong interference present.

Preferably, each reader stores its system identifier locally.

Preferably, each reader in a group tests for correlation of a received system identifier with the local system identifier.

Preferably, each reader executes listen before talk and system identifier correlation concurrently.

Preferably, after receipt of a system identifier which correlates with their local system identifier, readers cease listening for transmissions on other channels.

Preferably, other members of the group of readers synchronise with the system identifier from the first reader.

By synchronising with the system identifier from the first reader, each reader knows the elapsed time from transmission start and complies autonomously with the maximum permitted transmission time limit before freeing up the channel.

Preferably, each reader checks for the presence of a pattern indicating dense mode of transmission.

Preferably, the pattern comprises one of a system identifier, a start indicator and an end indicator.

These indicate that dense transmission has started and whether another reader is using or has stopped using the channel for transmission.

Preferably, the system identifier identifies a reader as a member of a particular dense interrogatory environment system.

An example of a method of listen before talk operation in a wireless RFID system will now be described with reference to the accompanying drawings in which:

> Figure 1 is an illustration of a dead zone in a conventional system;
> Figure 2 is a block diagram illustrating received levels in nearby distribution centres;
> Figure 3 illustrates detection of system identifier (SID), start transmission identifier (STI) and end of transmission identifier (ETI) patterns in a method in accordance with the present invention;
> Figure 4 shows an example of channel sharing in dense mode;
> Figure 5 illustrates collision between two reader STI and ETI transmissions;
> Figure 6 is a flow diagram illustrating an example of an SID algorithm;
> Figure 7 shows an example of multi-channel operation; and,
> Figure 8 is a graph illustrating autocorrelation of a transmitted sequence as autocorrelation function against time.

The examples given in this description are specific to the ETSI standard for RFID operation, but the invention is not limited to this and is applicable for any system operating in a similar way, even if the time frames and power levels differ.

For system planning and for optimal frequency re-use an alternative method is required in which the identity of different systems, such as different DIE systems, can be distinguished in a reliable manner. Such a solution does not depend on received thresholds, as in the LWS and PRS methods described above, but on a system ID which is unique to each deployment.

The present invention provides a reliable wireless identification method, which addresses the problems discussed and makes other wired solutions, or centralised LBT unnecessary. The solution of the present invention can be implemented in existing readers, using a software upgrade, as well as being a feature of new ones. The DIE mode is identified with a pattern, to be transmitted by the first reader at the beginning of the interrogation cycle. For example, members of a dense system are uniquely identified by a system identifier (SID) block. This means that readers which are allowed to hook on to the same frequency are predefined. This solves the ambiguity problem of the previous method in which an analogue threshold was used to define the range over which a dense system operated. The SID is transmitted using a coding scheme which provides substantial process gain, so that the SID can be decoded even in the presence of strong interference, and even at poor signal to noise ratio (S/N) ratio. Because of the coding gain, both impulsive and systematic interference is rejected and sensitivity levels close to the LBT threshold can be realised with low cost receivers. This eliminates the dead-zone problem found in both the LWS and the PRS methods described above.

As described earlier, the LBT mode for RFID equipment is specified in the ETSI EN 302 208 specification. However, there are some special requirements for LBT in DIE mode. In DIE mode, the TX and the RX frequencies are separated and therefore several readers within one system can transmit simultaneously on the same channel, as the DIE chips have measures to tolerate one another. A group of readers sharing the same frequency should behave like a single reader to comply with the LBT protocol. For this, the following additional steps are necessary:

The first reader in the system which carries out a normal LBT and finds an empty channel transmits an identifier to indicate that the frequency can be re-used by the members of that system. This reader becomes the master reader. Other members of the system need to be able to detect the identifier and preferably, use the same frequency. These readers become the slave readers. The SID block is transmitted by the first reader (master) that finds an empty channel and is subsequently triggered.

The system needs to ensure that all readers stop transmitting when the overall transmission time reaches 4 s and after the 100ms gap, the cycle can restart. The SID is only transmitted once, at the beginning of the 4s cycle and other readers in the system synchronise to this pattern. This means that all members of the system know the elapsed time since the transmission of the SID in a given channel. Readers can then autonomously comply with the 4s time limit, so further synchronisation is not necessary. The master reader transmits an SID block followed by its data. The transmission is finished with the transmission of an End of Transmission Identifier (ETI) block. Subsequent slave readers using the same channel first transmit a Start Transmission Identifier block (STI) followed by data transmission and then by the ETI block. The STI and the ETI blocks are transmitted orthogonally to the data and the SDI can either be orthogonal, or non orthogonal. If a gap of 5 ms, or more, occurs in the transmission in a given channel, the system should ensure that the channel has not been acquired during the gap by another system. The readers in the DIE system also need to be able to detect the identifier at the same threshold as that of the LBT threshold.

In idle mode, all readers in the system continuously monitor the channels in a sequential fashion. This typically means that they do a normal LBT in accordance to the EN 302 208 procedure, or such other procedure as may be required by the authorities. After the LBT, the readers check if a particular pattern (SID, STI or ETI) is found that characterises the dense mode transmission of the system.

When an SID pattern is found, this indicates that dense transmission has started and the remaining time on that channel is approximately 4s. If an STI pattern is found, it indicates that another reader has started using the channel. If an ETI pattern is found, it indicates that a member of the system has stopped transmitting in that channel.

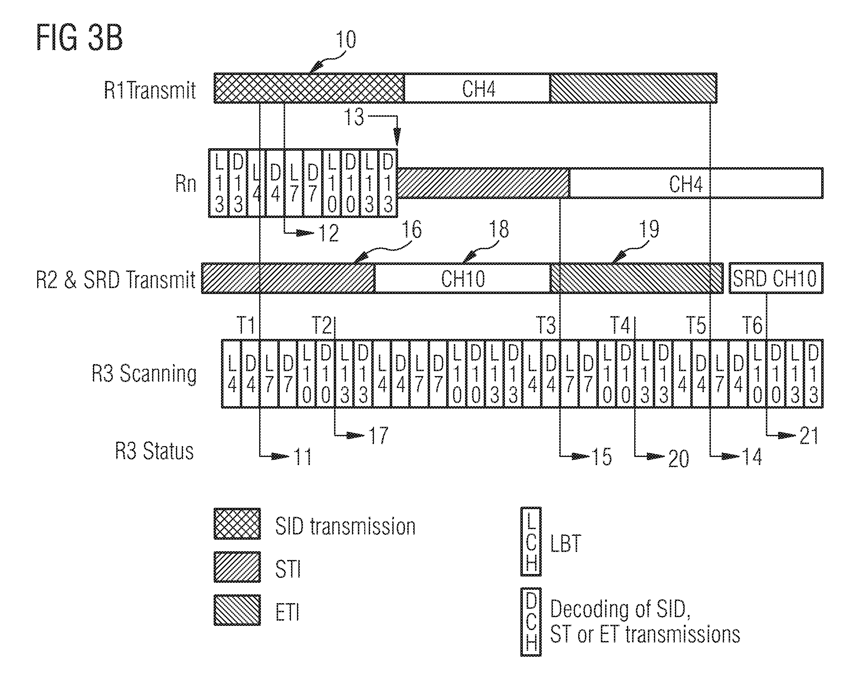

One aspect of the invention is that each reader has only one LBT receiver and the channels are sampled in a sequential fashion. The readers keep a map of the states of the channels and always 'know' which of the channels are available for dense transmission. This process is illustrated in Fig.3. A number of readers R1, R2, R3 to Rn are provided as shown in Fig.3a. In the example of Fig.3b, reader R1 is the first reader to transmit on channel CH4. R1 becomes the master and transmits the SID block 10 on channel CH4. When the CH4 SID is detected 11, up to 4s of transmission is possible, if the channel is continuously occupied. Any reader, for example Rn, when it detects 12 the CH4 SID, can start transmitting on channel CH4 as soon as that reader is triggered 13. After triggering, a CH4 STI is detected 15. When CH4 ETI is detected 14 by R1, it is still possible for up to 4s of transmissions because Rn is still transmitting. R2 is transmitting on channel CH10 as a slave. R2 first transmits an STI block 16, because R2 is not the first reader occupying channel CH10 in this example. When the CH10 STI is detected 17, transmission can be made for up to 4s from the CH10 SID, if the transmission is continuous. The STI block 16 is then followed by data 18 and by an ETI block 19 transmission. When CH10 ET is detected 20, no other transmission is detected. The scanning receiver is not able to monitor each channel continuously. The SID, STI, and the ETI blocks consist of repeated SID, STI and ETI patterns. The blocks need to be long enough to ensure that the scanning receivers can decode at least once the appropriate pattern, at least once as shown in Fig.3b. With the arrangement of the STI and the ETI patterns, continuous occupation of the channel is always guaranteed, provided that:

$$N_{STI}+1>N_{ETI}$$

where $N_{STI}$ and $N_{ETI}$ are the number of detected STI and ETI patterns respectively. This arrangement is another important aspect of the invention because it considerably simplifies the reader architecture, as it is no longer necessary to use multiple LBT receivers.

The state of all channels is continuously monitored and stored in scanning mode. R3 may be able to tune on to channel CH4, or channel CH10 instantly, as it holds and regularly updates the channel status. In R3's scan, at time T1, CH4 SID is detected 11; at T2 CH10 STI is detected 17; at T3, CH4 STI is detected 15; at T4, CH10 ET is detected 20; at T5 CH4 ET is detected 14; and at T6 monitoring continues 21. The function, whether listen before talk (L), or decoding (D) of SID, STI or ETI transmissions is indicated and also the channel number in each case.

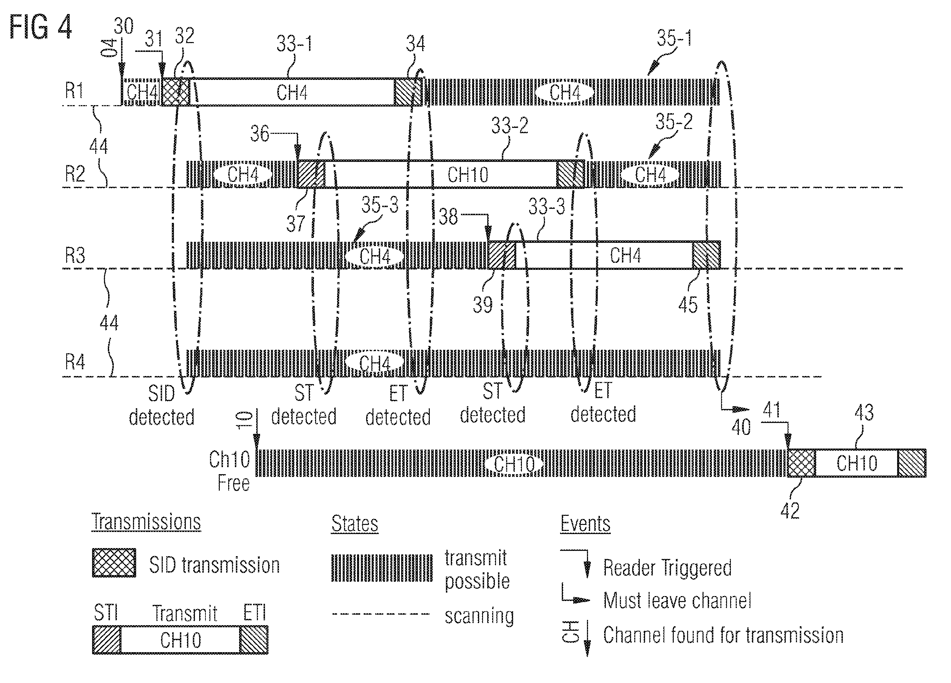

Another example is illustrated in Fig. 4. Here, a longer time span is shown to illustrate how the channel is shared between several readers R1, R2, R3 and R4. The readers scan 44 all channels for LBT, SID, STI and ETI transmission. After a successful LBT, where CH4 was found 30 to be available, R1 is triggered 31 and transmits the SID block 32 on CH4. R1 sends its transmission 33-1 of data, then sends an ETI 34 and moves into a state 35-1 where it can still transmit on that channel. R2 is triggered 36 slightly later and transmits an STI block 37 on CH4. As before, there is a section 33-2 for transmission of data and a section 35-2 where transmission is still possible on that channel. R3 also joins CH4 later and is triggered 38, then ST is detected 39 and transmission of data in section 33-3. The occupation of channel CH4 ends when R3 sends the ETI pattern 45. This means that the condition of $N_{STI}+1>N_{ETI}$ is no longer true, so CH4 is dropped 40. Consequently, R4 is not allowed to use channel 4, even although the 4 s time limit still has not expired in this example. However, R4 previously found a valid SID pattern and the continuity of channel CH10 occupation has been confirmed (not shown in Fig. 4). When R4 is triggered 41, it tunes to channel CH10 and transmits an SID block 42 and data 43 immediately.

The method of co-pending UK patent application GB2428941 on orthogonal transmissions in RFID systems to create a signalling channel may be used in the present invention for transmitting the STI and the ETI patterns orthogonally to the data transmissions. Should these patterns not be transmitted orthogonally, (as is the case for the PRS and the LWS methods), they would be blocked by data transmissions from other readers. For example R1 ETI would be blocked by the transmission of R2 on channel 4.

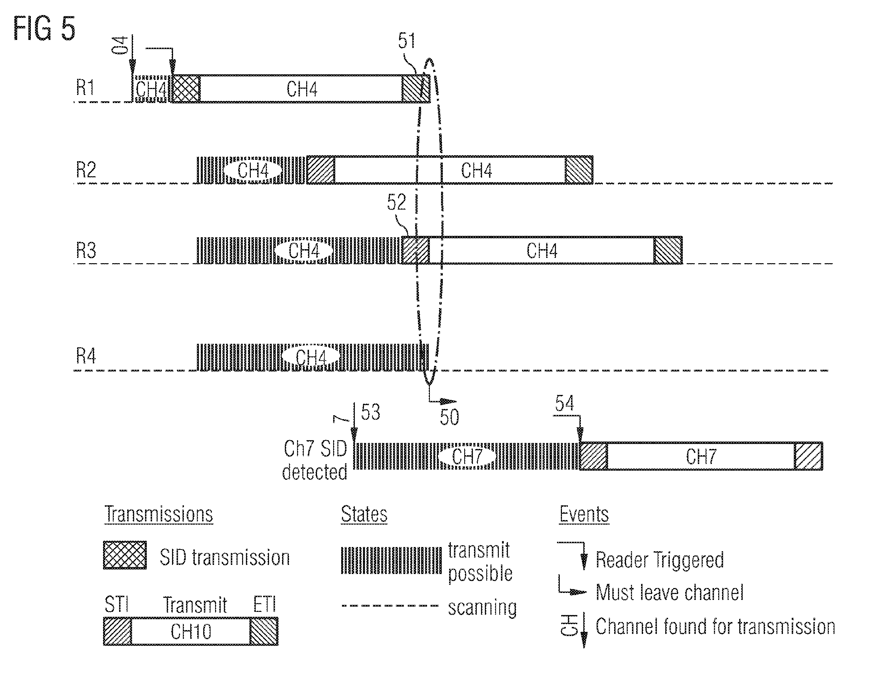

In typical RFID systems many readers operate simultaneously and there is a small probability of collisions between STI and ETI patterns. An example for this is shown in Fig. 5 where a collision 50 between R1 ETI 51 and R3 STI pattern 52 is detected. Under such circumstances R4 should not use the channel as the $N_{STI}+1>N_{ETI}$ equation cannot be evaluated. In the example of Fig. 5, R4 detects 53 that CH7 is available and moves 54 to this channel. In order to detect the collisions the appropriate algorithm is implemented in the receiver.

The System Identifier (SID) is a long pattern exhibiting excellent correlation properties. The length of the pattern provides a process gain of,

$$G_P = 10 * \log T_{SID}/T_{BIT}$$

and therefore the longer the SID pattern is, the worse S/(N+I) ratio can be tolerated. Similarly to the spread spectrum systems, the SID can be recovered even in negative S/(N+I) ratios with adequate process gain. This means that the length of the pattern is now an engineering trade-off between protection ratio and overhead in both, time and processing.

For example, a 255 bit long pattern provides a process gain of 24 dB; this is adequate to make the detection of the SID possible at -96dBm even in the presence of noise and strong interference. At 40 KB/s data rate the 255 SID is 6.528mS long. Readers which are intended to share the same channel have the same SID. The SID is stored in each reader locally. The stored pattern is correlated with the incoming SID and if the product exceeds the required threshold, the reader may transmit on the same channel. If the local SID does not match the incoming pattern, the result of the correlation is just noise and the reader must tune to another channel.

Which DIE readers share which channels can be predetermined by allocating the SIDs accordingly. Using the example of Fig. 2, there are n distribution centres, each of which can be allocated to a particular SID. DC1 and DC2, which are separated by 100m are able to share the same SID and therefore re-use the same frequencies. However, in borderline cases, such as DCn, which is separated from DC1 by 1 Km, then a different SID is issued. By coordinating the frequency re-use in such a manner, the utilization of the existing (very few) channels is greatly optimized. The advantage of the SID is that the choice of whether a system re-uses the channels is no longer influenced by the unreliable propagation conditions.

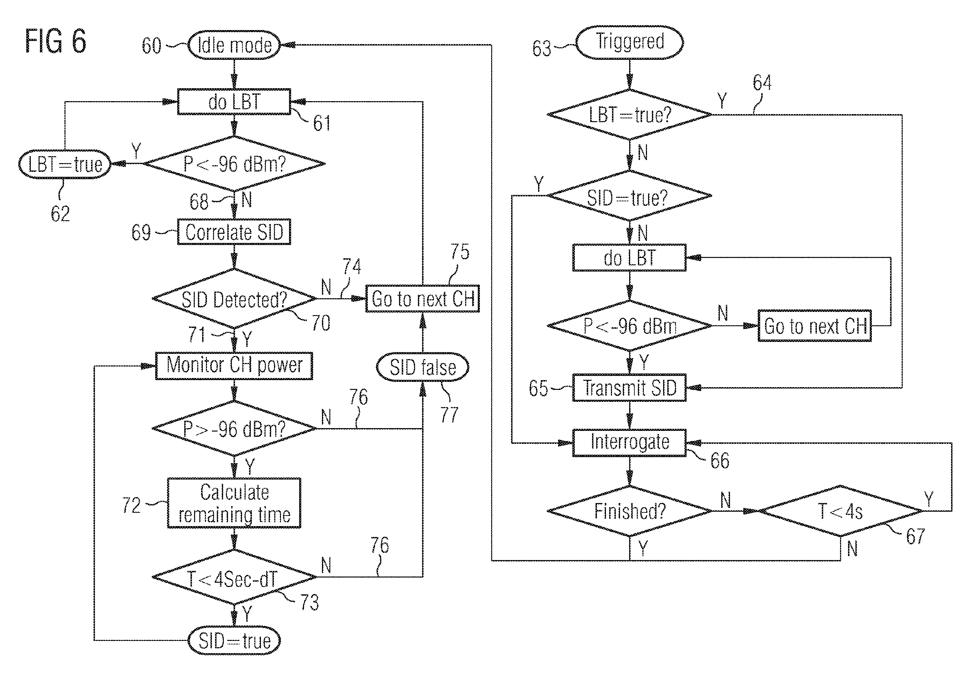

Fig. 6 illustrates an algorithm which controls the operation of the readers. With reference to Fig.6, all readers in idle mode 60 continuously monitor the channels. An LBT is carried out 61 and if the LBT is successful 62, then the readers stay on this channel and keep monitoring the channel power. Should any of the readers be triggered 63 in this state 64, the SID is transmitted 65 and the interrogation cycle 66 starts, up to the 4 s limit 67.

If the LBT is not successful 68, or the channel becomes occupied, then the readers correlate 69 the incoming samples with the local SID pattern 70. If a valid SID is found 71, a timer in the readers starts counting 72 the remaining time. As long as the remaining time 73 is less then 4s (minus a time margin, dT), the readers may transmit at this channel up to the 4 s time limit. If a valid SID is not found 74, then the reader goes 75 to the next channel. If either the power level, or time remaining are not correct 76, then the SID is determined to be false 77 and the reader moves 75 to the next channel.

The LBT and the SID correlations are concurrent processes. This means that the samples of the input signal are stored in a buffer up to 10ms, or up to the length of the SID pattern, whichever larger. The power calculation and the SID correlation are performed on the same block samples. This eliminates any gaps of monitoring the SID in that channel which would otherwise occur during the LBT measurement. In idle mode, all channels are monitored sequentially, in a sampled fashion, although this is not shown in Fig.6.

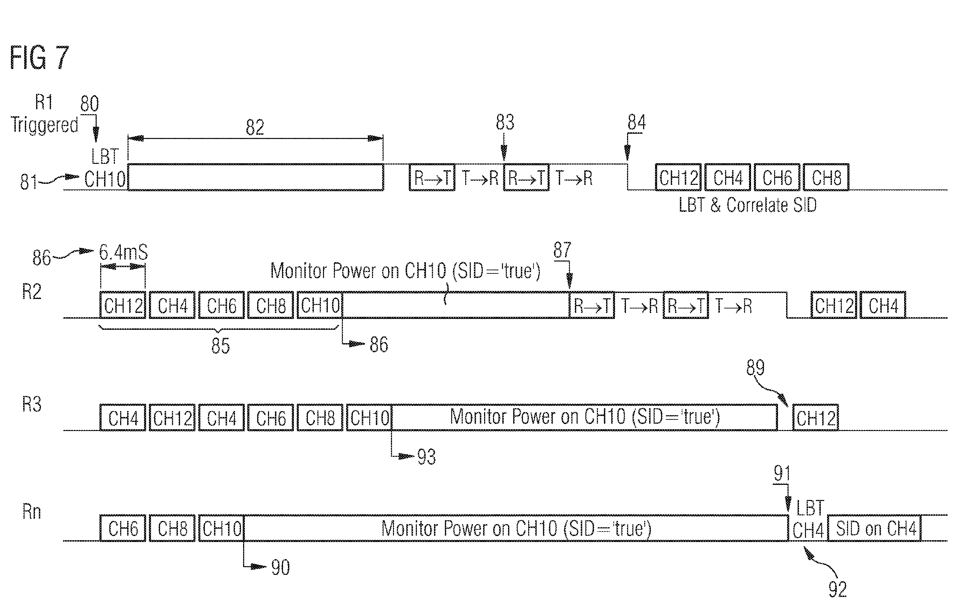

In order to arrange all channels to be monitored with a single receiver per reader, the synthesisers scan the channels in idle mode. An example for detecting the SID with scanning receivers is shown in Fig. 7. In this example, R1 is triggered 80 and carries out an LBT 81 on CH10, which is successful, then R1 immediately transmits the SID pattern 82. SID length is 2^8-1, that is 255 bits. This is transmitted N times on CH10, so for this example where the SID is 6.4ms long, the pattern is repeated 5 times, plus some margin to cover the tuning time of the synthesizers. After the SID transmission, R1 interrogates 83 its tag population and then returns 84 to idle mode.

Reader R2 is in idle mode checking 85 all channels for LBT and for SID. R2 fills 86 the input buffer with 6 to 10ms of contiguous waveform samples in channel 12 first, and carries out LBT and SID correlation. Channels CH12, CH4, CH6 and CH8 are all occupied with other systems in this example. When CH10 is sampled, correlation is found 93 with the SID (transmitted by R1) hence R1 stays on CH10. Subsequently, if R2 is triggered 87, it transmits on this channel.

R3 is again idle and scanning the channels and finds 88 CH10 SID. R3 continues to monitor the power to ensure that its own system is the one that occupies CH10. R1 is not requested to interrogate in this case and therefore when both R1 and R2 transmissions finish, i.e. SID is false 89, R3 also goes back to scanning mode. Finally Rn which was idle and then found 90 SID on CH10, is triggered 91. This reader has to go back to LBT 92 on CH4 as soon as the SID on CH4 has expired, either by the time limit, or by the end of channel occupancy.

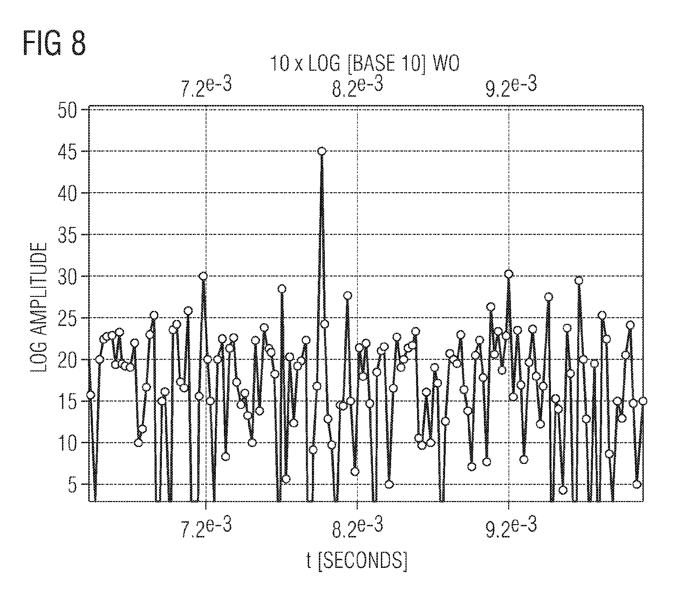

Fig.8 is the auto correlation of a 2^8-1 SID sequence transmitted at 40 Kb/s. The horizontal axis is the time in ms and the vertical axis is the auto correlation function in dB's. This diagram shows that when the sequence is perfectly synchronised , the peak is 15 dB above any other possible alignments in the time domain. This illustrates that there is +/- 7.5 dB margin to make a decision whether or not a particular pattern (or incoming noise) is a wanted SID.

A method incorporating the EN 302 208 Listen-Before-Talk protocol in Dense Interrogatory Environment has been described. The new method overcomes the shortfall of the present systems providing robust operation in a realistic RF environment.

The invention is able to distinguish between different systems operating in dense mode using the system identifier and grouping of readers into a system is no longer dependent on an analogue threshold, so this provides a reliable method for system planning. The invention does not require multi-channel receivers to monitor all channels simultaneously, so this means that the hardware costs are considerably lower than that for the LWS system and the invention can be implemented on existing hardware. The reader to tag communication is not interrupted and therefore there is no risk of interference with protocol and no timing constraints of patterns used for signalling. The invention provides adequate sensitivity using the appropriate coding, which eliminates the dead zones of the LWS and the PRS system. There is also a high immunity against impulsive interference and robust operation as the appropriate coding and error detection / correction technique can easily be implemented. The invention can achieve a similar performance, for mobile devices operating in dense interrogatory environment, to that of centrally controlled wired systems.

**Claims**

1. A method of listen before talk operation in a wireless system comprising at least one reader, the method comprising the or each reader listening for transmissions on a channel for a period of time; comparing channel power with a threshold to determine whether a channel is available; and if the channel is available, transmitting from a first reader an identifier to other members of a group of readers, indicating that the channel is available for re-use by the other members; wherein the identifier is a predetermined system identifier allocated to all readers in the group of readers.

2. A method according to claim 1, wherein each reader listens for transmissions on a series of channels sequentially to determine an available channel.

3. A method according to claim 1 or claim 2, wherein the system identifier comprises a system identifier block, uniquely identifying a group to which the members belong.

4. A method according to any preceding claim, wherein the system identifier is coded.

5. A method according to any preceding claim, wherein each reader stores its system identifier locally.

6. A method according to claim 5, wherein each reader in a group tests for correlation of a received system identifier with the local system identifier.

7. A method according to claim 6, wherein each reader executes listen before talk and system identifier correlation concurrently.

8. A method according to claim 6 or claim 7, wherein after receipt of a system identifier which correlates with their local system identifier, readers cease listening for transmissions on other channels.

9. A method according to any preceding claim, wherein other members of the group of readers synchronise with the system identifier from the first reader.

10. A method according to any preceding claim, wherein each reader checks for the presence of a pattern indicating dense mode of transmission.

11. A method according to claim 10, wherein the pattern comprises one of a system identifier, a start indicator and an end indicator.

12. A method according to any preceding claim, wherein the system identifier identifies a reader as a member of a particular dense interrogatory environment system.

**FIG 1**

**FIG 2**

**FIG 3A**

FIG 3B

FIG 4

| Transmissions | States | Events |
|---|---|---|
| ▨ SID transmission | ▥ transmit possible | ↓ Reader Triggered |
| STI Transmit ETI / CH10 | - - - - - scanning | └→ Must leave channel |
| | | CH↓ Channel found for transmission |

EP 1 868 136 A2

FIG 5

EP 1 868 136 A2

11

# FIG 6

## FIG 7

EP 1 868 136 A2

# FIG 8

10 x LOG [BASE 10] WO

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2428941 A